# FASCICULE DE BREVET EUROPEEN

(11) **EP 3 007 910 B1**
(45) Date de publication et mention de la délivrance du brevet: **04.11.2020**
(21) Numéro de dépôt: 14728194.3
(22) Date de dépôt: 05.06.2014
(51) Int. Cl.: B60C 9/06, B60C 15/00, B60C 9/20

(54) **ARMATURES DE CARCASSE ET DE SOMMET DE PNEUMATIQUE POUR MOTO**
MOTORRADREIFENKARKASSEN- UND -DECKENVERSTÄRKUNGEN
MOTORBIKE TYRE CARCASS AND CROWN REINFORCEMENTS

(30) Priorité: 10.06.2013 FR 1355325
(43) Date de publication de la demande: 20.04.2016
(73) Titulaire: Compagnie Générale des Etablissements Michelin, 63000 Clermont-Ferrand (FR)
(72) Inventeur: LAURENT, Christophe, F-63040 Clermont-Ferrand Cedex 9 (FR)
(74) Mandataire: Bauvir, Jacques
(86) Numéro de dépôt international: PCT/EP2014/061659
(87) Numéro de publication internationale: WO 2014/198618

(56) Documents cités:
- EP-A1- 1 253 024
- EP-A1- 2 186 652
- EP-A1- 2 423 006
- FR-A1- 3 006 628
- JP-A- S60 240 506
- US-A- 3 244 213
- US-A- 4 042 002
- US-A- 4 706 725

## Description

L'invention concerne un pneumatique destiné à équiper un véhicule motorisé à deux roues de type moto.

Bien que non limitée à une telle application, l'invention sera décrite plus particulièrement en référence à un pneumatique destiné à être monté à l'arrière ou à l'avant d'une moto de type Cruiser. Par rapport à une moto routière ou sportive, une moto de type Cruiser se caractérise par une vitesse maximale plus basse, typiquement au plus égale à 180 km/h, par une masse à vide plus élevée, en raison de la présence d'un moteur de grosse cylindrée et d'un carénage en chrome ou en métal, et par une masse en usage plus élevée, en raison de la charge transportée dans des sacoches ou de la présence d'un passager transporté à l'arrière de la moto.

Bien que les vitesses soient relativement modérées, la stabilité à haute vitesse, c'est-à-dire à la vitesse maximale de la moto, est une des contraintes les plus importantes pour la conception de pneumatiques pour moto. Cette stabilité doit être optimisée à la fois en ligne droite, c'est-à-dire à angle de carrossage nul, et en virage, par exemple pour un angle de carrossage de 20°, l'angle maximal de carrossage pour une moto de type Cruiser pouvant atteindre 30°. Par définition, l'angle de carrossage est l'angle que forme le plan moyen de la moto, c'est-à-dire le plan de symétrie de la moto contenant le centre de gravité de la moto, avec le plan perpendiculaire à la route et tangent à la trajectoire.

Dans ce qui suit, et par convention, les directions circonférentielle, axiale et radiale désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique. Les angles, par rapport à la direction circonférentielle, mentionnés dans ce qui suit, ne sont pas orientés et sont indiqués en valeur absolue.

Un pneumatique comprend classiquement une bande de roulement, destinée à venir en contact avec le sol par l'intermédiaire d'une surface de roulement, et reliée par l'intermédiaire de deux flancs à deux bourrelets, ces bourrelets assurant la liaison mécanique entre le pneumatique et la jante sur laquelle il est monté.

En outre, un pneumatique comprend une armature de renforcement, comprenant au moins une armature de carcasse radialement intérieure à la bande de roulement.

L'armature de carcasse d'un pneumatique pour moto de type Cruiser est généralement constituée d'au moins deux couches de carcasse. Une couche de carcasse est constituée de renforts le plus souvent en matériau textile, par exemple en nylon ou en polyester, et enrobés dans un matériau polymérique de type élastomère appelé mélange élastomérique. Les renforts d'une couche de carcasse sont parallèles entre eux et forment, avec la direction circonférentielle, un angle au plus égal à 65° en tout point de la couche de carcasse et, en particulier, en tout point d'une portion équatoriale de la couche de carcasse, symétrique par rapport au plan équatorial et de largeur axiale au plus égale à 0.45 fois la distance axiale entre les deux extrémités axiales de la surface de roulement. Les renforts de deux couches de carcasse consécutives, c'est-à-dire en contact l'une avec l'autre, sont croisés d'une couche à la suivante, c'est-à-dire forment, avec la direction circonférentielle, des angles de signe opposé et, le plus souvent mais pas nécessairement, de même valeur absolue. Une armature de carcasse, constituée de couches de carcasse dont les renforts sont croisés d'une couche à la suivante en formant avec la direction circonférentielle un angle au plus égal à 65°, est dite non radiale ou de type « bias ». L'architecture d'un tel pneumatique est alors dite de type « bias ».

Par ailleurs, une couche de carcasse peut être retournée ou non retournée.

Une couche de carcasse est dite retournée, lorsqu'elle comprend une partie principale, reliant les deux bourrelets entre eux et s'enroule, dans chaque bourrelet, de l'intérieur vers l'extérieur du pneumatique autour d'un renfort circonférentiel appelé tringle, pour former un retournement ayant une extrémité libre. La tringle est un renfort circonférentiel, le plus souvent métallique et enrobé dans un matériau généralement élastomérique ou textile. Dans le cas d'une couche de carcasse retournée, le retournement, dans chaque bourrelet, permet l'ancrage de la couche de carcasse retournée à la tringle. La portion de tringle en contact avec la couche de carcasse retournée contribue, en particulier au gonflage, à la reprise par couplage des efforts de tension dans la couche de carcasse retournée. Typiquement un retournement a une extrémité libre radialement extérieure au point le plus radialement intérieur de la tringle, positionnée à une distance radiale au plus égale à 0.5 fois la hauteur de section théorique du pneumatique telle que définie par les normes de la European Tyre and Rim Technical Organisation ou ETRTO.

Une couche de carcasse est dite non retournée, lorsqu'elle est constituée uniquement d'une partie principale, reliant les deux bourrelets entre eux, sans s'enrouler autour d'une tringle. Typiquement une couche de carcasse retournée a, dans chaque bourrelet, une extrémité libre radialement extérieure au point le plus radialement intérieur de la tringle et positionnée à une distance radiale au plus égale à 0.25 fois la hauteur de section théorique du pneumatique telle que définie par les normes de l'ETRTO. Chacune des deux portions d'extrémités de ladite couche de carcasse non retournée peut être couplée soit avec le retournement d'au moins une couche de carcasse retournée, soit avec la partie principale d'au moins une couche de carcasse retournée. Par couplage, on entend une zone de recouvrement entre la couche de carcasse non retournée et une couche de carcasse retournée, permettant une reprise des efforts de tension par cisaillement.

En outre, l'armature de renforcement d'un pneumatique pour moto de type Cruiser comprend le plus souvent, en plus d'une armature de carcasse de type « bias », une armature de sommet, radialement intérieure à la bande de roulement et radialement extérieure à l'armature de carcasse. L'architecture d'un tel pneumatique est alors dite de type « bias belted ».

L'armature de sommet d'un pneumatique pour moto de type Cruiser comprend généralement au moins une couche de sommet, constituée de renforts le plus souvent en matériau textile, par exemple en aramide, en nylon ou en polyester, ou en fibre de verre, ou éventuellement en métal, et enrobés dans un mélange élastomérique. Les renforts d'une couche de sommet sont parallèles entre eux et forment, avec la direction circonférentielle, un angle au plus égal à 30° en tout point de la couche de sommet et, en particulier, en tout point d'une portion équatoriale de la couche de sommet, symétrique par rapport au plan équatorial et de largeur axiale au plus égale à 0.45 fois la distance axiale entre les deux extrémités axiales de la surface de roulement. Les renforts de deux couches de sommet consécutives, c'est-à-dire en contact l'une avec l'autre, sont le plus souvent croisés d'une couche à la suivante, c'est-à-dire forment, avec la direction circonférentielle, des angles de signe opposé et, le plus souvent mais pas nécessairement, de même valeur absolue.

Un procédé usuel de fabrication d'un pneumatique de type « bias belted » comprend une première étape d'assemblage au cours de laquelle est réalisée la pose de l'armature de carcasse et de l'armature de sommet sur une forme cylindrique de diamètre sensiblement égal à celui des tringles du pneumatique, pour former l'armature de renforcement. La deuxième étape de cuisson commence par la conformation de l'armature de renforcement précédemment obtenue, faisant passer celle-ci d'une forme cylindrique à une forme toroïdale. Du fait de cette conformation, l'angle formé par les renforts d'une couche de carcasse, avec la direction circonférentielle, varie le long de la couche de carcasse entre chaque tringle et le plan équatorial : par exemple entre 55° au niveau de chaque tringle et 30° dans le plan équatorial. De même, l'angle formé par les renforts d'une couche de sommet, avec la direction circonférentielle, varie le long de la couche de sommet entre les extrémités axiales et le milieu de la couche de sommet.

En ce qui concerne la bande de roulement radialement extérieure à l'armature de sommet, le matériau constitutif est un mélange élastomérique. Un mélange élastomérique est caractérisé mécaniquement, après cuisson, par des caractéristiques de contrainte-déformation en traction, déterminées par des essais de traction. Ces essais de traction sont réalisés sur une éprouvette, selon une méthode connue, par exemple conformément à la norme internationale ISO 37, et dans les conditions normales de température (23°C + ou - 2°C) et d'hygrométrie (50% + ou -5% d'humidité relative), définies par la norme internationale ISO 471. On appelle module d'élasticité à 10% d'allongement d'un mélange élastomérique, exprimé en méga pascals (MPa), la contrainte de traction mesurée pour un allongement de 10% de l'éprouvette. Un module d'élasticité à 10% d'allongement d'un mélange élastomérique est classiquement déterminé à 23°C, mais peut également l'être à d'autres températures, telles que par exemple à 100°C, pour prendre en compte l'évolution de ce module en fonction de la température. A titre d'exemple, le module d'élasticité à 10% d'allongement d'un mélange élastomérique pour la bande de roulement d'un pneumatique pour moto de type Cruiser est environ égal à 5 MPa à 23°C et à 3.8 MPa à 100°C.

Le document JP 4365601 décrit un pneumatique pour moto de type « bias belted », dont la stabilité en ligne droite et en courbe est améliorée. L'armature de carcasse comprend deux ou trois couches de carcasses retournées dont les renforts en textile forment avec l'équateur du pneumatique, c'est-à-dire la direction circonférentielle, un angle compris entre 40° et 70°. L'armature de sommet comprend deux ou trois couches de sommet dont les renforts en textile forment avec l'équateur du pneumatique, c'est-à-dire la direction circonférentielle, un angle compris entre 11° et 25°. De plus la hauteur de l'apex, contenu dans chaque bourrelet du pneumatique, est comprise entre 0.15 et 0.6 fois la hauteur de section du pneumatique. Enfin, le mélange élastomérique des flancs ont des duretés plus basses que celle du mélange élastomérique de la bande roulement.

Le document EP 2 186 652 A1 montre un autre pneumatique pour moto.

Les inventeurs se sont donnés pour objectif de concevoir un pneumatique de type « bias belted» pour moto, permettant de garantir une stabilité satisfaisante de la moto aussi bien dans une trajectoire en ligne droite à haute vitesse et à angle de carrossage nul que dans une trajectoire en courbe à fort angle de carrossage pouvant atteindre 30°.

Ce but a été atteint, selon l'invention, par un pneumatique pour véhicule motorisé à deux roues de type moto selon les revendications.

La combinaison d'angles respectifs des renforts de couche de sommet et de couche de carcasse, selon l'invention, permet de maximiser la rigidité latérale du pneumatique en fonction de la rigidité de dérive. La rigidité latérale d'un pneumatique, exprimée en daN/mm, correspond à la force latérale ou axiale, c'est-à-dire appliquée au pneumatique selon la direction axiale du pneumatique, permettant d'obtenir un déplacement axial du pneumatique égal à 1 mm. La rigidité de dérive d'un pneumatique, exprimée en daN/°, correspond à la force latérale ou axiale, c'est-à-dire appliquée au pneumatique selon la direction axiale du pneumatique, permettant d'obtenir un angle de dérive, c'est-à-dire un angle de rotation autour de la direction radiale du pneumatique, égal à 1°. Il est connu que la stabilité en ligne droite et en courbe d'une moto est d'autant meilleure que les rigidités respectivement latérale et de dérive des pneumatiques sont élevées.

Pour un angle des renforts de couche de sommet donné, les inventeurs ont déterminé, pour différents angles des renforts de couche de carcasse, la rigidité latérale du pneumatique, en fonction de sa rigidité de dérive. Ils ont montré que la rigidité latérale, fonction de la rigidité de dérive, augmente, passe par un maximum puis décroît. Ils en ont déduit la combinaison de plages d'angles optimales des renforts de couche de sommet et de couche de carcasse permettant de maximiser la rigidité latérale en fonction de la rigidité de dérive. Ainsi ils ont mis en évidence que les intervalles d'angles respectivement de [15°, 25°], pour les renforts de couche de sommet, et de [40°, 50°], pour les renforts de couche de carcasse, permettent d'atteindre des niveaux de rigidité latérale et de rigidité de dérive optimum, garantissant une stabilité satisfaisante de la moto, en ligne droite comme en courbe.

Préférentiellement, les intervalles d'angles pour les renforts de couche de sommet et les renforts de couche de carcasse sont respectivement [16°, 22°] et [45°, 50°].

Selon un mode de réalisation préféré, l'angle des renforts de toute couche de sommet est constant sur toute la largeur axiale de la couche de sommet. La largeur axiale d'une couche de sommet est la distance axiale antre les extrémités axiales de la couche de sommet. Par angle constant, on entend un angle qui ne varie pas plus de 4° entre le milieu de la couche de sommet, situé dans le plan équatorial, et chaque extrémité axiale de la couche de sommet. Cette constance de l'angle des renforts de couche de sommet permet d'optimiser la contribution de la couche de sommet à la rigidité latérale et à la rigidité de dérive.

L'obtention d'un tel angle constant des renforts de couche de sommet est garanti par un procédé de fabrication du pneumatique, dans lequel les couches de sommet sont mises en place, radialement à l'extérieur de l'armature de carcasse, lorsque l'armature de carcasse a déjà sa forme toroïdale, pour éviter toute variation d'angle au cours de la conformation. En d'autres termes, les couches de sommet sont posées non pas, au cours d'une première étape de pose sur une forme cylindrique, mais au cours d'une deuxième étape de pose sur une forme toroïdale. L'utilisation d'un tel procédé de pose dit « deux temps », en raison du fait que la pose de l'armature de renforcement est réalisée en deux étapes, une première étape de pose de l'armature de carcasse sur une forme cylindrique suivie d'une deuxième étape de pose de l'armature de l'armature de sommet sur une forme toroïdale, n'est pas usuelle pour un pneumatique de type « bias belted ». En effet, ce procédé « deux temps » est un procédé usuel de fabrication d'un pneumatique radial, dans lequel les renforts de couche de carcasse forment, avec la direction circonférentielle, un angle compris entre 65° et 90°. Dans un tel procédé « deux temps », seules les couches de carcasse sont conformées lors du passage de la forme cylindrique à la forme toroïdale, les couches de sommet étant mises en place ultérieurement directement sur la forme toroïdale.

L'armature de sommet comprend encore préférentiellement au moins deux couches de sommet dont les renforts respectifs sont croisés d'une couche de sommet à la suivante. En effet, une seule couche de sommet ne permet généralement pas d'atteindre la rigidité circonférentielle requise pour l'armature de sommet, compte tenu du type de renforts utilisés le plus souvent textiles.

Pour une armature de sommet comprenant au moins deux couches de sommet, les renforts respectifs de deux couches de sommet successives sont avantageusement croisés d'une couche de sommet à la suivante en formant, avec la direction circonférentielle, des angles respectifs égaux en valeur absolue. En d'autres termes, ces angles sont opposés. Cette architecture permet un fonctionnement mécanique symétrique de l'armature de sommet, en particulier, si les renforts sont identiques entre les deux couches de sommet. Si les renforts sont différents, en particulier en matériaux différents, il peut être intéressant d'avoir des angles distincts en valeur absolue.

Préférentiellement, les renforts de couche de sommet sont en textile, de préférence en polyamide aromatique ou en polyamide aliphatique ou en polyester. Les polyamides aromatiques sont usuellement appelés aramide et les polyamides aliphatiques sont usuellement appelés nylon. Ce type de matériau est utilisé usuellement pour les renforts de couche de sommet d'un pneumatique pour moto, car il présente un bon compromis entre l'endurance et le coût de fabrication.

Encore plus préférentiellement, les renforts de couche de sommet sont en polyester, qui est le matériau présentant le meilleur compromis entre l'endurance et le coût de fabrication.

Selon une variante de réalisation, les renforts d'au moins une première couche de sommet sont en polyester et les renforts d'au moins une deuxième couche de sommet sont en polyamide aromatique. En effet, l'utilisation du seul polyester pour les renforts de couche de sommet peut s'avérer insuffisante pour obtenir une rigidité circonférentielle suffisante de l'armature de sommet. Par conséquent, il peut être intéressant de combiner l'utilisation de polyester pour les renforts d'une première couche de sommet avec celle d'un polyamide aromatique, tel que l'aramide, de module d'élasticité en extension sensiblement plus élevé pour les renforts d'une première couche de sommet, en vue d'obtenir un compromis rigidité circonférentielle/ endurance/ coût intéressant.

Selon l'invention, l'armature de carcasse comprend au moins une couche de carcasse retournée, s'enroulant, dans chaque bourrelet, de l'intérieur vers l'extérieur du pneumatique autour d'une tringle, pour former un retournement comprenant une extrémité libre. Une couche de carcasse retournée est ancrée de façon satisfaisante à la tringle par son retournement, ce qui garantit sa bonne tenue au déroulement.

Selon une variante de ce mode de réalisation préféré, l'armature de carcasse comprend au moins deux couches de carcasse retournées, s'enroulant, dans chaque bourrelet, de l'intérieur vers l'extérieur du pneumatique autour d'une tringle, pour former respectivement un retournement comprenant une extrémité libre. Cette architecture contribue efficacement à la rigidité latérale requise, par la présence de deux parties principales et de deux retournements de couches de carcasse dans les flancs, soit quatre épaisseurs de couches de carcasse.

Selon l'invention, le retournement d'au moins une couche de carcasse retournée est au moins en partie en contact avec au moins une couche de sommet, le long d'une zone de recouvrement, comprise entre l'extrémité axiale de la couche de sommet et l'extrémité libre du retournement. Cette zone de recouvrement permet à la fois de verrouiller le retournement dans l'armature de sommet et d'augmenter les rigidités respectivement latérale et de dérive, par rapport à un retournement plus court dont l'extrémité libre est radialement intérieure à l'extrémité axiale de toute couche de sommet. Cette architecture particulière est dite de type « shoulder lock ». Cette conception peut concerner le retournement d'une seule couche de carcasse, par exemple la couche de carcasse axialement la plus intérieure dans les flancs, ou tout ou partie des retournements des couches de carcasse, lorsque l'armature de carcasse comprend au moins deux couches de carcasses retournées.

Selon une variante avantageuse du point de vue fabrication, le retournement est radialement intérieur à la couche de sommet dans la zone de recouvrement.

Il est avantageux que la largeur curviligne de la zone de recouvrement soit au moins égale à 0.2 fois la demi-largeur curviligne de la couche de sommet. La largeur curviligne de la zone de recouvrement correspond à la distance curviligne entre l'extrémité axiale de la couche de sommet et l'extrémité libre du retournement. La demi-largeur curviligne de la couche de sommet est mesurée selon l'abscisse curviligne de la couche de sommet entre une extrémité axiale et le milieu de ladite couche de sommet. Cette valeur minimale de largeur curviligne de la zone de recouvrement garantit un effet « shoulder lock » significatif.

Il est encore avantageux que la largeur curviligne de la zone de recouvrement soit au plus égale à 0.6 fois la demi-largeur curviligne de la couche de sommet. Cette valeur maximale résulte d'une contrainte de fabrication : une zone de recouvrement plus large est plus difficile à fabriquer sur les procédés de fabrication connus. De plus, cette limite de largeur garantit que l'extrémité libre de retournement est positionnée axialement à l'extérieur de la portion de sommet correspondant à la surface de contact entre le pneumatique et le sol à angle de carrossage nul, ce qui limite avantageusement l'augmentation de rigidité de dérive.

Pour atteindre une rigidité latérale maximale, il est préférable que l'extrémité libre de retournement de toute couche de carcasse retournée soit axialement intérieure et radialement extérieure à l'extrémité axiale de toute couche de sommet. En d'autres termes, la conception « shoulder lock » appliquée à toutes les carcasses retournées de l'armature de carcasse est particulièrement intéressante.

Les renforts de couche de carcasse sont avantageusement en textile, de préférence en polyester ou en nylon en raison du bon compromis entre l'endurance et le coût de fabrication.

Il peut être également intéressant que les renforts respectifs de la couche de sommet radialement la plus intérieure et de la couche de travail la plus radialement extérieure forment, avec la direction circonférentielle, des angles respectifs de même signe. Ceci permet de réduire la rigidité de dérive avec un niveau de rigidité latérale identique.

Concernant la bande de roulement, le module d'élasticité à 10% d'allongement du mélange élastomérique de la bande de roulement est avantageusement au moins égal à 6.5 MPa et au plus égal à 9 MPa à 23°C, et au moins égal à 5 MPa et au plus égal à 6 MPa à 100°C. Pour un mélange élastomérique usuel de bande roulement pour pneumatique de moto de type Cruiser, le module d'élasticité à 10% d'allongement est environ égal à 5 MPa à 23°C et à 3.8 MPa à 100°C. Par conséquent, le module d'élasticité du mélange élastomérique de la bande de roulement, selon l'invention, est plus élevé, ce qui permet une meilleure contribution de la bande roulement aux rigidités latérale et de dérive du pneumatique. Un tel mélange élastomérique permet donc d'augmenter encore les rigidités respectivement latérale et de dérive du pneumatique.

Concernant les flancs du pneumatique, reliant la bande de roulement aux bourrelets, le module d'élasticité à 10% d'allongement du mélange élastomérique des flancs est au moins égal à 8 MPa à 23°C. Ce niveau de module d'élasticité à 10% d'allongement du mélange élastomérique des flancs garantit une bonne contribution des flancs aux rigidités respectivement latérale et de dérive du pneumatique. Par ailleurs, le module d'élasticité à 10% d'allongement du mélange élastomérique des flancs est sensiblement supérieur au module d'élasticité à 10% d'allongement du mélange élastomérique de la bande de roulement, à 23°C.

D'autres détails et caractéristiques avantageux de l'invention ressortiront ci-après de la description de l'invention en référence aux figures 1 à 4 qui représentent :
- figure 1 : une coupe méridienne d'un pneumatique selon un premier mode de réalisation de l'invention,
- figure 2 : une coupe méridienne d'un pneumatique selon un deuxième mode de réalisation de l'invention, de type « shoulder lock »,
- figure 3 : un graphique représentant l'évolution de la rigidité latérale d'un pneumatique selon l'invention en fonction de sa rigidité de dérive, pour divers angles de renforts de couche de sommet et de couche de carcasse.
- figure 4 : un graphique représentant l'évolution de la rigidité latérale d'un pneumatique selon l'invention, en fonction de sa rigidité de dérive, dans un mode de réalisation de type « shoulder lock », pour diverses valeurs de recouvrement.

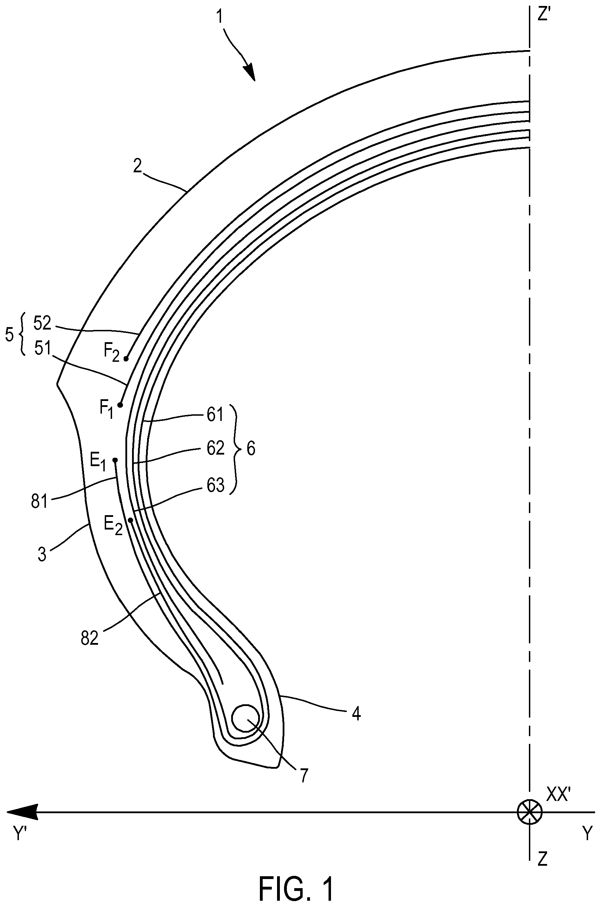

Les figures 1 à 4 ne sont pas représentées à l'échelle pour en simplifier la compréhension.

La figure 1 représente une demi-coupe méridienne d'un pneumatique 1 pour véhicule motorisé à deux roues de type moto selon l'invention, réalisée dans un plan méridien (YZ) passant par l'axe de rotation du pneumatique de direction axiale (YY'), le pneumatique 1 étant symétrique par rapport au plan équatorial (XZ) passant par le milieu de la bande de roulement 2 et perpendiculaire à l'axe de rotation du pneumatique. Sur cette demi-coupe méridienne, la bande de roulement 2 est reliée par le flanc 3 au bourrelet 4. L'armature de sommet 5 radialement intérieure à la bande de roulement 2 comprend deux couches de sommet (51, 52) ayant des extrémités axiales (F₁, F₂). Les renforts de chaque couche de sommet (51, 52) forment, avec la direction circonférentielle (XX'), un angle au moins égal à 15° et au plus égal à 25° dans le plan équatorial (XZ). L'armature de carcasse 6 radialement intérieure à l'armature de sommet 5 comprend trois couches de carcasse (61, 62, 63), dont deux couches de carcasse retournées (61, 62) et une couche de carcasse non retournée (63). Les deux couches de carcasse retournées (61, 62) s'enroulent autour de la tringle 7, pour former des retournements respectifs (81, 82) ayant des extrémités libres (E₁, E₂). Les renforts de chaque couche de carcasse (61, 62, 63) forment, avec la direction circonférentielle (XX'), un angle au moins égal à 40° et au plus égal à 50° dans le plan équatorial (XZ).

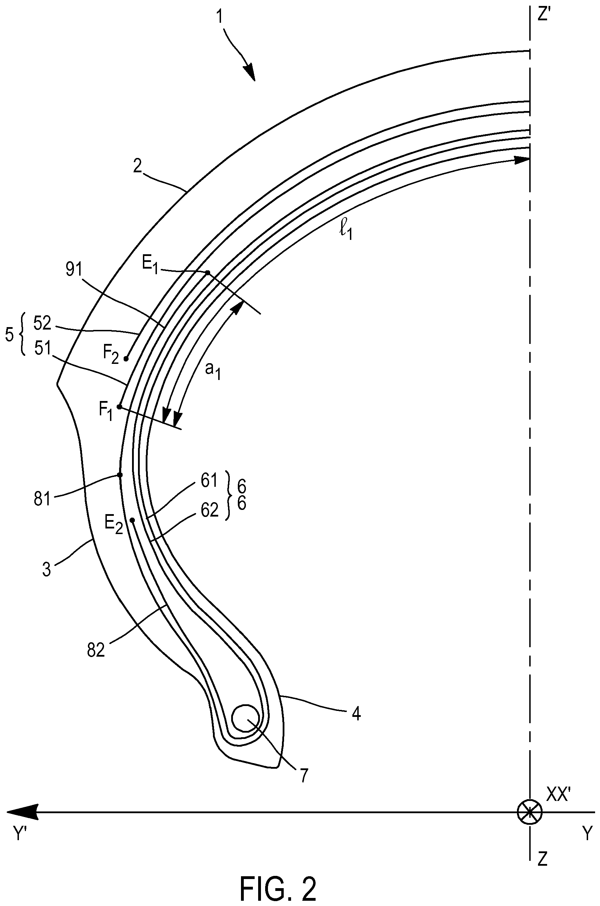

La figure 2 représente une demi-coupe méridienne d'un pneumatique 1 pour véhicule motorisé à deux roues de type moto selon l'invention, dans un mode de réalisation de type « shoulder lock ». Sur cette demi-coupe méridienne, la bande de roulement 2 est reliée par le flanc 3 au bourrelet 4. L'armature de sommet 5 radialement intérieure à la bande de roulement 2 comprend deux couches de sommet (51, 52) ayant des extrémités axiales (F₁, F₂). Les renforts de chaque couche de sommet (51, 52) forment, avec la direction circonférentielle (XX'), un angle au moins égal à 15° et au plus égal à 25° dans le plan équatorial (XZ). L'armature de carcasse 6 radialement intérieure à l'armature de sommet 5 comprend deux couches de carcasse retournées (61, 62) s'enroulant autour de la tringle 7, pour former des retournements respectifs (81, 82) ayant des extrémités libres (E₁, E₂). Le retournement (81) de la couche de carcasse retournée (61), axialement la plus intérieure dans le flanc 3, est au moins en partie en contact avec la couche de sommet (51), de demi-largeur curviligne (l₁), le long d'une zone de recouvrement (91), comprise entre l'extrémité axiale (F₁) de la couche de sommet (51) et l'extrémité libre (E₁) du retournement (81), sur une largeur curviligne (a₁). Le ratio a₁/l₁ caractérise ledit recouvrement. Le retournement (82) de la couche de carcasse retournée (62), axialement la plus extérieure dans le flanc 3, a son extrémité libre (E₂) radialement intérieure à l'extrémité axiale (F₁) de la couche de sommet (51). Les renforts de chaque couche de carcasse (61, 62) forment, avec la direction circonférentielle (XX'), un angle au moins égal à 40° et au plus égal à 50° dans le plan équatorial (XZ).

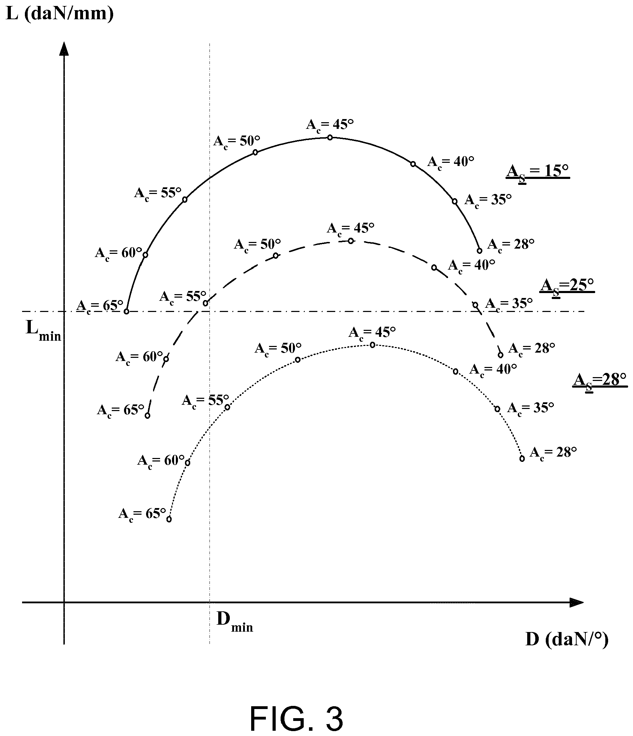

La figure 3 est un graphique représentant l'évolution de la rigidité latérale L, exprimée en daN/mm, d'un pneumatique selon l'invention en fonction de sa rigidité de dérive D, exprimée en daN/°, pour divers angles A_{S} de renforts de couche de sommet. Plus précisément, chaque courbe est déterminée pour un angle A_{S} de renforts de couche de sommet donné. Trois courbes sont ainsi représentées, correspondant respectivement à des angles A_{S} de renforts de couche de sommet respectivement égaux à 15°, 22° et 28°. Pour chaque valeur d'angle A_{S} de renforts de couche de sommet, la rigidité latérale L et la rigidité de dérive D sont déterminées pour des valeurs d'angle A_{C} de renforts de couche de carcasse pouvant prendre successivement les valeurs 65°, 60° , 55°, 50°, 45°, 40°, 35° et 28°. Les courbes ainsi obtenues passent par un maximum de rigidité latérale L en fonction de la rigidité de dérive D. Les inventeurs se sont fixés une valeur de rigidité de dérive minimale Dₘᵢₙ et une valeur de rigidité de latérale minimale Lₘᵢₙ, pour déterminer les plages de valeur optimales des angles A_{S} des renforts de couche de sommet et des angles A_{C} de couches de carcasse, permettant de maximiser la rigidité latérale L avec une rigidité de dérive D suffisante. Ce graphique montre que les intervalles d'angles A_{S} respectivement de [15°, 25°], pour les renforts de couche de sommet, et d'angles A_{C} de [40°, 50°], pour les renforts de couche de carcasse, permettent d'atteindre des niveaux de rigidité latérale L et de rigidité de dérive D optimum.

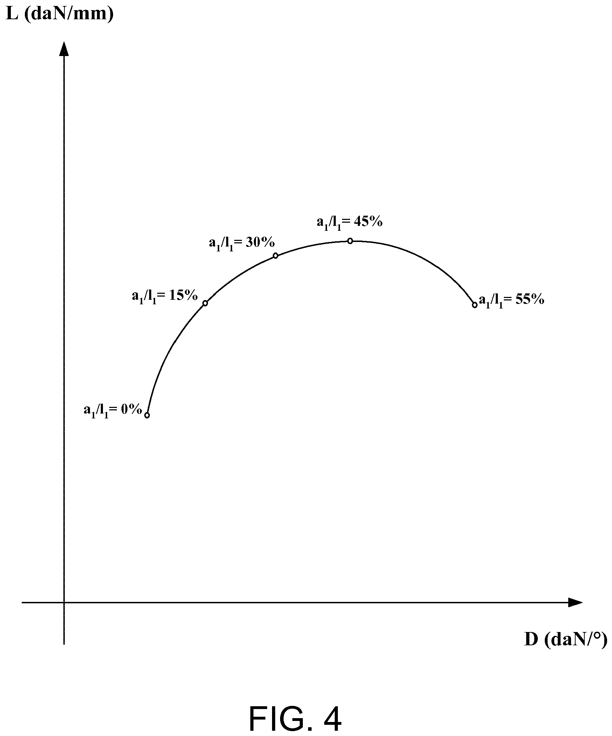

La figure 4 est un graphique représentant l'évolution de la rigidité latérale L, exprimée en daN/mm, d'un pneumatique selon l'invention, dans un mode de réalisation de type « shoulder lock » en fonction de sa rigidité de dérive D, exprimée en daN/°, pour des angles des renforts de couche de sommet et de couche de carcasse donnés. Le paramètre variable est la largeur curviligne de recouvrement a₁, ou plus précisément le ratio a₁/l₁ entre la largeur curviligne de recouvrement a₁ et la demi-largeur curviligne l₁ de la couche de sommet 51, tel que représenté sur la figure 2. Les rigidités respectivement latérale L et de dérive D sont déterminées pour un ratio a₁/l₁ pouvant prendre les valeurs 0%, 15%, 30% 45% et 55%. La courbe représentée présente une rigidité latérale maximale L pour un ratio a₁/l₁ égal à 45%.

L'invention a été plus particulièrement étudiée pour un pneumatique de moto de dimension 160/70B17. Un pneumatique de référence a été comparé à un pneumatique selon l'invention, dans un mode de réalisation de type « shoulder lock » tel que représenté sur la figure 2.

Le pneumatique de référence comprend une armature de carcasse à deux couches de carcasses retournées dont les renforts en polyester forment, avec la direction circonférentielle, un angle égal à 28° dans le plan équatorial. L'extrémité libre du retournement de la carcasse retournée la plus axialement intérieure dans les flancs est positionnée à une distance radiale de 50 mm, radialement à l'extérieur du point le plus radialement intérieur de la tringle. L'extrémité libre du retournement de la carcasse retournée la plus axialement extérieure dans les flancs est positionnée à une distance radiale de 42 mm, radialement à l'extérieur du point le plus radialement intérieur de la tringle. L'armature de sommet du pneumatique de référence comprend deux couches de sommet dont les renforts en aramide forment, avec la direction circonférentielle, un angle égal à 28° dans le plan équatorial. Dans cette conception de référence, la rigidité latérale du pneumatique est égale à 24 daN/mm, alors que la rigidité de dérive est égale à 67 daN/°.

Le pneumatique selon l'invention, dans un mode de réalisation de type « shoulder lock » tel que représenté sur la figure 2, comprend une armature de carcasse à deux couches de carcasses retournées dont les renforts en polyester et forment, avec la direction circonférentielle, un angle égal à 45° dans le plan équatorial. L'extrémité libre du retournement de la carcasse retournée la plus axialement intérieure dans les flancs est positionnée à une distance radiale de 76 mm, radialement à l'extérieur du point le plus radialement intérieur de la tringle. La zone de recouvrement entre ce premier retournement et la couche de sommet en contact est égale à 20 mm. L'extrémité libre du retournement de la carcasse retournée la plus axialement extérieure dans les flancs est positionnée à une distance radiale de 70 mm, radialement à l'extérieur du point le plus radialement intérieur de la tringle. Il n'y a pas de zone de recouvrement entre ce deuxième retournement et une couche de sommet. L'armature de sommet du pneumatique selon l'invention comprend, par ailleurs, deux couches de sommet dont les renforts en aramide forment, avec la direction circonférentielle, un angle égal à 22°, constant sur la largeur axiale de la couche de sommet. Dans cette conception selon l'invention, la rigidité latérale du pneumatique est égale à 27 daN/mm, soit + 3 daN/ mm par rapport à la référence, alors que la rigidité de dérive est égale à 72 daN/°, soit + 5 daN/ ° par rapport à la référence.

## Revendications

1. Pneumatique (1) pour véhicule motorisé à deux roues de type moto comprenant :
- une bande de roulement (2) reliée par deux flancs (3) à deux bourrelets (4),
- une armature de sommet (5) radialement intérieure à la bande de roulement (2) et comprenant au moins une couche de sommet (51, 52),
- une couche de sommet (51, 52) comprenant des renforts parallèles entre eux formant, avec la direction circonférentielle (XX') du pneumatique, un angle au plus égal à 30° dans le plan équatorial (XZ),
- une armature de carcasse (6) radialement intérieure à l'armature de sommet (5) et comprenant au moins deux couches de carcasse (61, 62, 63),
- chaque couche de carcasse (61, 62, 63) comprenant des renforts parallèles entre eux formant, avec la direction circonférentielle (XX'), un angle au plus égal à 65° dans le plan équatorial (XZ), et croisés d'une couche de carcasse à la suivante,
- les renforts de chaque couche de sommet (51, 52) formant, avec la direction circonférentielle (XX'), un angle au moins égal à 15° et au plus égal à 25° dans le plan équatorial (XZ), ladite couche de sommet (51, 52) ayant une largeur axiale comprise entre ses deux extrémités axiales dans lequel l'angle des renforts de toute couche de sommet (51, 52) est constant sur toute la largeur axiale de la couche de sommet,
- les renforts de chaque couche de carcasse (61, 62, 63) formant, avec la direction circonférentielle (XX'), un angle au moins égal à 40° et au plus égal à 50° dans le plan équatorial (XZ) ;
- l'armature de carcasse (6) comprenant au moins une couche de carcasse retournée (61, 62), s'enroulant, dans chaque bourrelet (4), de l'intérieur vers l'extérieur du pneumatique autour d'une tringle (7), pour former un retournement (81, 82) comprenant une extrémité libre (E₁, E₂) ;
- les renforts de couche de sommet (51, 52) étant en polyester,
**caractérisé en ce que** le retournement (81) d'au moins une couche de carcasse retournée (61) est au moins en partie en contact avec au moins une couche de sommet (51), le long d'une zone de recouvrement (91), comprise entre l'extrémité axiale (F₁) de la couche de sommet (51) et l'extrémité libre (E₁) du retournement (81).

2. Pneumatique (1) selon la revendication 1, **dans lequel** l'armature de sommet (5) comprend au moins deux couches de sommet (51, 52) dont les renforts respectifs sont croisés d'une couche de sommet à la suivante.

3. Pneumatique (1) selon la revendication 2, **dans lequel** les renforts respectifs de deux couches de sommet (51, 52) successives sont croisés d'une couche de sommet à la suivante en formant, avec la direction circonférentielle (XX'), des angles égaux en valeur absolue.

4. Pneumatique (1) selon l'une quelconque des revendications 1 à 3, **dans lequel** l'armature de carcasse (6) comprend au moins deux couches de carcasse retournées (61, 62), s'enroulant, dans chaque bourrelet (4), de l'intérieur vers l'extérieur du pneumatique autour d'une tringle (7), pour former respectivement un retournement (81, 82) comprenant une extrémité libre (E₁, E₂).

5. Pneumatique (1) selon l'une quelconque des revendications 1 à 4, **dans lequel** le retournement (81) est radialement intérieur à la couche de sommet (51) dans la zone de recouvrement (91).

6. Pneumatique (1) selon l'une quelconque des revendications 1 ou 5, **dans lequel** la largeur curviligne (a₁) de la zone de recouvrement (91) est au moins égale à 0.2 fois la demi-largeur curviligne (l₁) de la couche de sommet (51).

7. Pneumatique (1) selon l'une quelconque des revendications 1 à 6, **dans lequel** la largeur curviligne (a₁) de la zone de recouvrement (91) est au plus égale à 0.6 fois la demi-largeur curviligne (l₁) de la couche de sommet (51).

8. Pneumatique (1) selon l'une quelconque des revendications 4 à 7, **dans lequel** l'extrémité libre (E₁, E₂) de retournement (81, 82) de toute couche de carcasse retournée (61, 62) est axialement intérieure et radialement extérieure à l'extrémité axiale (F₁, F₂) de toute couche de sommet (61, 62).

9. Pneumatique selon l'une quelconque des revendications 1 à 8, **dans lequel** les renforts de couche de carcasse (61, 62, 63) sont en textile, de préférence en polyester ou en nylon.

10. Pneumatique selon l'une quelconque des revendications 1 à 9, la bande de roulement étant constituée d'un mélange élastomérique, **dans lequel** le module d'élasticité à 10% d'allongement du mélange élastomérique de la bande de roulement est au moins égal à 6.5 MPa et au plus égal à 9 MPa à 23°C, et au moins égal à 5 MPa et au plus égal à 6 MPa à 100°C.

11. Pneumatique selon l'une quelconque des revendications 1 à 10, les flancs du pneumatique étant constitués d'un mélange élastomérique, **dans lequel** le module d'élasticité à 10% d'allongement du mélange élastomérique des flancs est au moins égal à 8 MPa à 23°C.

## Patentansprüche

1. Reifen (1) für zweirädriges motorisiertes Fahrzeug vom Motorrad-Typ, umfassend:
- einen Laufstreifen (2), der durch zwei Flanken (3) mit zwei Wülsten (4) verbunden ist,
- eine Scheitelarmierung (5), die sich radial innerhalb des Laufstreifens (2) befindet und mindestens eine Scheitelschicht (51, 52) umfasst,
- eine Scheitelschicht (51, 52) umfassend zueinander parallele Verstärkungen, die mit der Umfangsrichtung (XX') des Reifens einen Winkel von höchstens gleich 30° in der Äquatorialebene (XZ) bilden,
- eine Karkassenarmierung (6), die sich radial innerhalb der Scheitelarmierung (5) befindet und mindestens zwei Karkassenschichten (61, 62, 63) umfasst,
- jede Karkassenschicht (61, 62, 63) umfassend zueinander parallele Verstärkungen, die mit der Umfangsrichtung (XX') einen Winkel von höchstens gleich 65° in der Äquatorialebene (XZ) bilden und von einer Karkassenschicht zur nächsten gekreuzt sind,
- wobei die Verstärkungen jeder Scheitelschicht (51, 52) mit der Umfangsrichtung (XX') einen Winkel von mindestens gleich 15° und höchstens gleich 25° in der Äquatorialebene (XZ) bilden, wobei die Scheitelschicht (51, 52) eine axiale Breite zwischen ihren zwei Axialenden aufweist, wobei der Winkel der Verstärkungen jeder Scheitelschicht (51, 52) über die gesamte axiale Breite der Scheitelschicht konstant ist,
- wobei die Verstärkungen jeder Karkassenschicht (61, 62, 63) mit der Umfangsrichtung (XX') einen Winkel von mindestens gleich 40° und höchstens gleich 50° in der Äquatorialebene (XZ) bilden;
- die Karkassenarmierung (6) umfassend mindestens eine umgeschlagene Karkassenschicht (61, 62), die sich in jedem Wulst (4) vom Inneren zum Äußeren des Reifens um eine Stange (7) rollt, um einen Umschlag (81, 82) zu bilden, der ein freies Ende (E₁, E₂) umfasst;
- wobei die Scheitelschicht-Verstärkungen (51, 52) aus Polyester sind,
**dadurch gekennzeichnet, dass** der Umschlag (81) mindestens einer umgeschlagenen Karkassenschicht (61) zumindest teilweise mit mindestens einer Scheitelschicht (51) entlang eines Überdeckungsbereichs (91) zwischen dem Axialende (F₁) der Scheitelschicht (51) und dem freien Ende (E₁) des Umschlags (81) in Kontakt steht.

2. Reifen (1) nach Anspruch 1, wobei die Scheitelarmierung (5) mindestens zwei Scheitelschichten (51, 52) umfasst, deren jeweilige Verstärkungen von einer Scheitelschicht zur nächsten gekreuzt sind.

3. Reifen (1) nach Anspruch 2, wobei die jeweiligen Verstärkungen zweier aufeinanderfolgender Scheitelschichten (51, 52) von einer Scheitelschicht zur nächsten gekreuzt sind, wobei sie mit der Umfangsrichtung (XX') Winkel mit gleichem Absolutwert bilden.

4. Reifen (1) nach einem der Ansprüche 1 bis 3, wobei die Karkassenarmierung (6) mindestens zwei umgeschlagene Karkassenschichten (61, 62) umfasst, die sich in jedem Wulst (4) vom Inneren zum Äußeren des Reifens um eine Stange (7) rollen, um jeweils einen Umschlag (81, 82) zu bilden, der ein freies Ende (E₁, E₂) umfasst.

5. Reifen (1) nach einem der Ansprüche 1 bis 4, wobei sich der Umschlag (81) radial innerhalb der Scheitelschicht (51) im Überdeckungsbereich (91) befindet.

6. Reifen (1) nach einem der Ansprüche 1 oder 5, wobei die krummlinige Breite (a₁) des Überdeckungsbereichs (91) mindestens gleich dem 0,2-fachen der halben krummlinigen Breite (l₁) der Scheitelschicht (51) ist.

7. Reifen (1) nach einem der Ansprüche 1 bis 6, wobei die krummlinige Breite (a₁) des Überdeckungsbereichs (91) höchstens gleich dem 0,6-fachen der halben krummlinigen Breite (l₁) der Scheitelschicht (51) ist.

8. Reifen (1) nach einem der Ansprüche 4 bis 7, wobei sich das freie Ende (E₁, E₂) des Umschlags (81, 82) jeder umgeschlagenen Karkassenschicht (61, 62) radial innerhalb und radial außerhalb des Axialendes (F₁, F₂) jeder Scheitelschicht (61, 62) befindet.

9. Reifen nach einem der Ansprüche 1 bis 8, wobei die Karkassenschicht-Verstärkungen (61, 62, 63) aus Textil sind, vorzugsweise aus Polyester oder aus Nylon.

10. Reifen nach einem der Ansprüche 1 bis 9, wobei der Laufstreifen von einer Elastomermischung gebildet ist, wobei der Elastizitätsmodul bei 10 % Dehnung der Elastomermischung des Laufstreifens bei 23 °C mindestens gleich 6,5 MPa und höchstens gleich 9 MPa, und bei 100 °C mindestens gleich 5 MPa und höchstens gleich 6 MPa ist.

11. Reifen nach einem der Ansprüche 1 bis 10, wobei die Flanken des Reifens von einer Elastomermischung gebildet sind, wobei der Elastizitätsmodul bei 10 % Dehnung der Elastomermischung der Flanken bei 23 °C mindestens gleich 8 MPa ist.

## Claims

1. Tyre (1) for a two-wheeled motorized vehicle of the motorbike type, comprising:
- a tread (2) connected by two sidewalls (3) to two beads (4),
- a crown reinforcement (5) radially on the inside of the tread (2) and comprising at least one crown layer (51, 52),
- a crown layer (51, 52) comprising mutually parallel reinforcers forming, with the circumferential direction (XX') of the tyre, an angle at most equal to 30° in the equatorial plane (XZ),
- a carcass reinforcement (6) radially on the inside of the crown reinforcement (5) and comprising at least two carcass layers (61, 62, 63),
- each carcass layer (61, 62, 63) comprising mutually parallel reinforcers forming, with the circumferential direction (XX'), an angle at most equal to 65° in the equatorial plane (XZ), and crossed from one carcass layer to the next,
- the reinforcers of each crown layer (51, 52) forming, with the circumferential direction (XX'), an angle at least equal to 15° and at most equal to 25° in the equatorial plane (XZ), said crown layer (51, 52) having an axial width comprised between its two axial ends in which the angle of the reinforcers of any crown layer (51, 52) is constant over the entire axial width of the crown layer,
- the reinforcers of each carcass layer (61, 62, 63) forming, with the circumferential direction (XX'), an angle at least equal to 40° and at most equal to 50° in the equatorial plane (XZ),
- the carcass reinforcement (6) comprising at least one turned-up carcass layer (61, 62) wound, in each bead (4), from the inside towards the outside of the tyre around a bead wire (7) to form a turnup (81, 82) comprising a free end (E1, E2),
- the reinforcers of crown layer (51, 52) being made of polyester,
**characterized in that** the turnup (81) of at least one turned-up carcass layer (61) is at least partially in contact with at least one crown layer (51) along a region of overlap (91) comprised between the axial end (F1) of the crown layer (51) and the free end (E₁) of the turnup (81).

2. Tyre (1) according to Claim 1 in which the crown reinforcement (5) comprises at least two crown layers (51, 52) of which the respective reinforcers are crossed from one crown layer to the next.

3. Tyre (1) according to Claim 2, **in which** the respective reinforcers of two successive crown layers (51, 52) are crossed from one crown layer to the next forming, with the circumferential direction (XX') angles that are equal in terms of absolute value.

4. Tyre (1) according to any one of Claims 1 to 3, **in which** the carcass reinforcement (6) comprises at least two turned-up carcass layers (61, 62) wound, in each bead (4), from the inside towards the outside of the tyre around a bead wire (7), in order respectively to form a turnup (81, 82) comprising a free end (E₁, E₂).

5. Tyre (1) according to any one of Claims 1 to 4, **in which** the turnup (81) is radially on the inside of the crown layer (51) in the region of overlap (91).

6. Tyre (1) according to either one of Claims 1 and 5, **in which** the curvilinear width (a₁) of the region of overlap (91) is at least equal to 0.2 times the curvilinear half-width (l₁) of the crown layer (51).

7. Tyre (1) according to any one of Claims 1 to 6, **in which** the curvilinear width (a₁) of the region of overlap (91) is at most equal to 0.6 times the curvilinear half-width (l₁) of the crown layer (51).

8. Tyre (1) according to any one of Claims 4 to 7, **in which** the free end (E₁, E₂) of the turnup (81, 82) of any turned-up carcass layer (61, 62) is axially on the inside and radially on the outside of the axial end (F₁, F₂) of any crown layer (61, 62).

9. Tyre according to any one of Claims 1 to 8, **in which** the reinforcers of carcass layer (61, 62, 63) are made of textile, preferably of polyester or of nylon.

10. Tyre according to any one of Claims 1 to 9, the tread being made of an elastomeric compound, **in which** the elastic modulus at 10% elongation of the elastomeric compound of the tread is at least equal to 6.5 MPa and at most equal to 9 MPa at 23°C, and at least equal to 5 MPa and at most equal to 6 MPa at 100°C.

11. Tyre according to any one of Claims 1 to 10, the sidewalls of the tyre being made of an elastomeric compound, **in which** the elastic modulus at 10% elongation of the elastomeric compound of the sidewalls is at least equal to 8 MPa at 23°C.
